# EUROPEAN PATENT SPECIFICATION

(11) **EP 0 491 985 B1**
(45) Date of publication and mention of the grant of the patent: **02.08.2000**
(21) Application number: 90125464.9
(22) Date of filing: 24.12.1990
(51) Int. Cl.: C08L 67/02

(54) **Impact modified polybutylene terephthalate**
Schlagzähmodifiziertes Polybutylenterephthalat
Polytéréphtalate de butylène à résistance au choc modifiée

(43) Date of publication of application: 01.07.1992
(73) Proprietor: GENERAL ELECTRIC COMPANY, Schenectady, N.Y. 12151 (US)
(72) Inventor: Goff, Leslie Joe, NL-4600 AC Bergen op Zoom (NL); Van Oosterbosch, Cornelis Jacobus Maria, NL-4600 AC Bergen op Zoom (NL); Van der Meer, Roelof, NL-4600 AC Bergen op Zoom (NL)
(74) Representative: Grever, Frederik

(56) References cited:
- EP-A- 0 022 216
- EP-A- 0 335 394
- FR-A- 2 311 808
- FR-A- 2 617 176
- Polymer, 1987, Vol. 28, September, p. 1703-1711

## Description

This invention relates to impact modified polybutylene terephthalate.

Poly(butylene terephthalate) (hereinafter abbreviated as PBT) is a thermoplastic material having good chemical resistance and relatively good flow. PBT possesses a glass transition temperature of approximately 40-50° C. Therefore, in order to achieve the toughness needed for most practical purposes, an impact modifier should be added to the PBT. Several impact modifiers have been used for PBT previously, including ABS which is customarily used in PBT compositions not containing polycarbonate. A special kind of ABS-graft polymers has been disclosed as impact modifiers for PBT in EP-A-0022216. Also acrylonitrile-butadiene copolymers have been used for this purpose and according to Fowler, M.E. Keskkula, H, Paul, D.R., Polymer, 28, p.1703-1711 (1987) copolymers from acrylonitrile and cis-butadiene provide a low temperature ductility. A further problem is that for some uses good charpy notched impact strength (hereinafter sometimes abbreviated as CNI) is desired. For CNI there is a very strong concentration effect caused by the notch in this test, and therefore the material strain is constrained entirely in the middle of the specimen bar, and around the fracture surface, as discussed by Polato, F., J.Mat.Sci. 20, p. 1455-1465, (1985). A CNI of at least 25 J/m which is needed for some purposes, can be obtained with high percentages of ABS polymers or the like, but in that case the viscosities suffer severely. Accordingly, there is a need for an impact modifier for PBT which in moderate contents provides the desired high CNI values.

Thus, the invention provides an impact modified polybutylene terephatalate composition containing an impact modifier, wherein the impact modifier is a mixture of (1) an acrylonitrile and butadiene units-containing polymer and (2) a terpolymer of (a) ethylene, (b) a lower alkyl acrylate and (c) a monomer which contains a heterocycle containing one oxygen atom as the hetero-atom.

Component (1) is one of the usual impact modifiers for this purpose and can be an acrylonitrile-butadiene copolymer or one of the several ABS polymers, for instance of the graft or core-shell type.

Component (2) is a terpolymer wherein the greater parts of the monomers (55-75 %) is derived from ethylene, 20-30 % of the monomers is derived from a lower alkyl acrylate, and 5-15 % of the monomers is derived from monomer (c), it being understood that the sum of the three percentages is 100. By "lower alkyl acrylate" is understood here a C1-4 alkyl ester of acrylic or methacrylic acid.

Component (c) can contain the heterocycle as part of the main polymer chain or in a pendant group. An example of the first possibility is maleic anhydride, and a particularly suitable pendant heterocylic group is the glycidyl residue. A particularly preferred monomer (c) is glycidyl methacrylate.

Some of these terpolymers are commercially available and all these terpolymers will be produced according to well-known processes.

The weight ratio between components (1) and (2) can vary within wide limits, but is preferably 10:1 to 1:1.5 and more preferably 4:1 to 1:1.

As mentioned hereinabove, the impact modifying mixture should be used in an impact modifying amount. This amount can also vary within wide limits, and will also depend on the influence on other physical properties which can be tolerated. In general the combination of the present invention will be used in a total amount of 6-20 weight percent of the composition. Amounts of less than 6 % usually will not have sufficient impact modifying effect and amounts of substantially over 20 % will tend to unduly affect other desirable properties. Preferably the amount of the combination is 10-15 % of the entire composition.

Of course, the compositions of the invention may contain minor amounts of further usual additives, such as anti-oxidants, fillers, reinforcing fillers, stabilizers, dyes and pigments, plasticizers, mold release agents, lubricants, antistatic agents, flame retardants and the like.

The following examples are intended to elucidate the present invention.

### Example 1 (comparative)

PBT compositons were prepared with various impact modifiers, and the physical properties of the compositions were measured. The results are as follows:

**Table 1**

| Composition | 1 | 2 | 3 | 4 | 5 | 6 | 7 | 8 |
|---|---|---|---|---|---|---|---|---|
| PBT | 89.7 | 84.7 | 79.7 | 75.7 | 89.7 | 89.7 | 89.7 | 89.7 |
| Hindered Phenol | 0.2 | 0.2 | 0.2 | 0.2 | 0.2 | 0.2 | 0.2 | 0.2 |
| Sandostab 4020a) | 0.1 | 0.1 | 0.1 | 0.1 | 0.1 | 0.1 | 0.1 | 0.1 |
| ABS | 10 | 15 | 20 | 25 | - | - | - | - |
| core-shell polymer b) | - | - | - | - | 10 | - | - | - |
| core-shell polymer c) | - | - | - | - | - | 10 | - | - |
| Terpolymer A^{d)} | - | - | - | - | - | - | 10 | - |
| Terpolymer B^{e)} | - | - | - | - | - | - | - | 10 |

| Physical data | 1 | 2 | 3 | 4 | 5 | 6 | 7 | 8 |
|---|---|---|---|---|---|---|---|---|
| Ten.modulus (MPa) | 2210 | 2110 | 1937 | 1688 | 2175 | 2127 | 2264 | 2114 |
| Ten.Str. Yield (MPa) | 46.7 | 46.3 | 41.9 | 37.6 | 49.8 | 49.0 | 49.0 | 48.0 |
| Elong. Break (%) | 195 | 215 | 255 | 240 | 154 | 157 | 121 | 61 |
| INI at RT (J/m) | 525 | 695 | 808 | 850 | 105 | 125 | 80 | 605 |
| CNI at RT (kJ/m2) | 8.8 | 22.3 | 28.4 | 31.3 | 5.4 | 8.3 | 9.8 | 14.5 |
| MVI (250°C/50N) (cm3/10') | 21.4 | 9.7 | 5.2 | 2.4 | 23.4 | 22.6 | -- | 5.9 |

| | | | | | | | | |
|---|---|---|---|---|---|---|---|---|
| a) pentaerythritol-tetrakis(3-dodecylthiopropionate) | | | | | | | | |
| b) core-shell polymer having 80 % butadiene-polystyrene core and 20 % poly-MMA shell | | | | | | | | |
| c) core-shell polymer as b), but with core-shell ratio of 90:10 | | | | | | | | |
| d) Terpolymer of ethylene with 26 % ethylacrylate and 7 % maleic anhydride; | | | | | | | | |
| e) Terpolymer of ethylene with 26 % ethylacrylate and 7 % glycidylmethacrylate INI means Izod notched impact strength; RT means room temperature; CNI means charpy notched impact strength and MVI means melt viscosity index. | | | | | | | | |

These screening tests show that when using the ABS polymer as impact modifier, CNI values of over 25 kJ/m2 can only be obtained with high percentages of the ABS with concomitant unacceptably low MVI values. 10 % of terpolymer (A) gives a clearly higher CNI value than the same amount of the ABS, and terpolymer B in a content of 10 % gives a considerably higher CNI value. The two other tested substances give worse results than the ABS, when used in the same amount of 10 %.

### Example 2

Combinations of the ABS and the terpolymer B of Example 1 were tested in three different ratios. The results are given in the following Table.

**Table 2**

| Composition | I | II | III |
|---|---|---|---|
| PBT | 84.7 | 84.7 | 84.7 |
| Terpolymer B | 7.5 | 5 | 3 |
| ABS | 7.5 | 10 | 12 |
| Hindered phenol | 0.2 | 0.2 | 0.2 |
| Sandostab 4020 | 0.1 | 0.1 | 0.1 |

| Results | I | II | III |
|---|---|---|---|
| Ten.mod (MPA) | 1790 | 1860 | 1950 |
| Ten.Str. Yield (MPa) | 47.3 | 42.2 | 42.8 |
| Elong. (%) | 230 | 170 | 130 |
| INI at RT (J/m) | 866 | 854 | 802 |
| CNI at RT (kJm2) | 30.5 | 29.4 | 29.9 |
| MVI (250°C/50N) (cm3/10') | 10.7 | 12.2 | 10.9 |

As appears from these results the desired CNI values of over 25 kJ/m2 are easily attained with the three tested mixtures. It should be remarked in this respect that terpolymer B is a more expensive material than the ABS so that it is economically very interesting that approximately the same CNI values were obtained over the examined range of ABS/terpolymer B ratios of 1:1 till 4:1. The commercial product used as a comparison is believed to contain also 15 % of impact modifier.

## Claims

1. Polybutylene terephthalate composition containing an impact modifier, wherein the impact modifier is a mixture of (1) an acrylonitrile and butadiene units-containing polymer and (2) a terpolymer of (a) ethylene, (b) a lower alkylacrylate and (c) a monomer which contains a hetero-cycle containing one oxygen atom as the hetero-atom.

2. Polybutylene terephthalate composition according to claim 1, wherein component (1) is an ABS polymer.

3. Polybutylene terephthalate composition according to claims 1-2, wherein monomer (c) is glycidyl methacrylate.

4. Polybutylene terephthalate composition according to claims 1-3, wherein the weight ratio of component (1) and component (2) is 10:1 to 1:1.5.

5. Polybutylene terephthalate composition according to claim 4, wherein the ratio is 4:1 tot 1:1.

6. Polybutylene terephthalate composition according to claim 1 comprising further usual additives.

7. Polybutylene terephthalate composition according to any claims 1-6, wherein the mixture comprises 6-20 weight percent of the entire composition.

8. Polybutylene terephthalate composition according to claim 7, wherein the mixture comprises 10-15 weight percent of the entire composition.

9. Polybutylene terephthalate composition according to any of claims 1-8 having a charpy notched impact strength at room temperature of at least 25 J/m2.

## Patentansprüche

1. Polybutylenterephthalatzusammensetzung enthaltend einen Schlagzähmodifizierer, wobei der Schlagzähmodifizierer eine Mischung aus (1) einem Acrylnitril und Butadieneinheiten enthaltendem Polymer und (2) einem Terpolymer aus (a) Ethylen, (b) einem niedrigen Alkylacrylat und (c) einem Monomer ist, welches einen Heterozyklus enthält, der ein Sauerstoffatom als Heteroatom enthält.

2. Polybutylenterephthalatzusammensetzung gemäß Anspruch 1, dadurch gekennzeichnet, daß Bestandteil (1) ein ABS-Polymer ist.

3. Polybutylenterephthalatzusammensetzung gemäß Ansprüchen 1 bis 2, dadurch gekennzeichnet, daß das Monomer (c) Glycidylmethacrylat ist.

4. Polybutylenterephthalatzusammensetzung gemäß Ansprüchen 1 bis 3, dadurch gekennzeichnet, daß das Gewichtsverhältnis der Komponente (1) und der Komponente (2) 10 : 1 bis 1 : 1,5 ist.

5. Polybutylenterephthalatzusammensetzung gemäß Anspruch 4, dadurch gekennzeichnet, daß das Verhältnis 4 : 1 bis 1 : 1 ist.

6. Polybutylenterephthalatzusammensetzung gemäß Anspruch 1, welche weiterhin übliche Additive aufweist.

7. Polybutylenterephthalatzusammenzetzung gemäß einem der Ansprüche 1 bis 6, dadurch gekennzeichnet, daß die Mischung 6 bis 20 Gew.-% der gesamten Zusammensetzung aufweist.

8. Polybutylenterephthalatzusammensetzung gemäß Anspruch 7, dadurch gekennzeichnet, daß die Mischung 10 bis 15 Gew.-% der gesamten Zusammensetzung aufweist.

9. Polybutylenterephthalatzusammensetzung gemäß einem der Ansprüche 1 bis 8, dadurch gekennzeichnet, daß sie eine Kerbschlagzähigkeit nach Charpy bei Raumtemperatur von wenigstens 25 J/m² hat.

## Revendications

1. Composition à base de poly(téréphtalate de butylène), contenant un agent modifiant la résistance au choc, dans laquelle l'agent modifiant la résistance au choc est un mélange de (1) un polymère contenant des motifs d'acrylonitrile et des motifs de butadiène et de (2) un terpolymère de(a) l'éthylène, (b) un acrylate d'alkyle inférieur et (c) un monomère contenant un hétérocycle renfermant un atome d'oxygène comme hétéro-atome.

2. Composition à base de poly(téréphtalate de butylène) selon la revendication 1, dans laquelle le constituant (1) est un polymère ABS.

3. Composition à base de poly(téréphtalate de butylène) selon la revendication 1 ou 2, pour laquelle le monomère (c) est le méthacrylate de glycidyle.

4. Composition à base de poly(téréphtalate de butylène) selon l'une quelconque des revendications 1 à 3, pour laquelle le rapport en poids du constituant (1) au constituant (2) est compris dans l'intervalle allant de 10:1 à 1:1,5.

5. Composition à base de poly(téréphtalate de butylène) selon la revendication 4, pour laquelle le rapport est compris dans l'intervalle allant de 4:1 à 1:1.

6. Composition à base de poly(téréphtalate de butylène) selon la revendication 1, qui comprend en outre des additifs habituels.

7. Composition à base de poly(téréphtalate de butylène) selon l'une quelconque des revendications 1 à 6, pour laquelle le mélange représente 6 à 20 % en poids de la composition totale.

8. Composition à base de poly(téréphtalate de butylène) selon la revendication 7, pour laquelle le mélange représente 10 à 15 % en poids de la composition totale.

9. Composition à base de poly(téréphtalate de butylène) selon l'une quelconque des revendications 1 à 8, qui présente une résistance au choc Charpy, pour un barreau entaillé, d'au moins 25 joules par m² à la température de la salle.
